# EUROPEAN PATENT SPECIFICATION

(11) **EP 1 859 961 B1**
(45) Date of publication and mention of the grant of the patent: **09.03.2011**
(21) Application number: 07007349.9
(22) Date of filing: 10.04.2007
(51) Int. Cl.: B60C 9/20

(54) **Pneumatic tire for motorcycle**
Luftreifen für ein Motorrad
Pneu pour motocyclette

(30) Priority: 22.05.2006 JP 2006141761
(43) Date of publication of application: 28.11.2007
(73) Proprietor: SUMITOMO RUBBER INDUSTRIES, LTD., Hyogo-ken (JP)
(72) Inventor: Shibamoto, Shohei, Kobe-shi, Hyogo 651-0072 (JP)
(74) Representative: Manitz, Finsterwald & Partner GbR

(56) References cited:
- EP-A- 1 683 654
- US-A- 4 034 791
- US-A- 5 435 369
- US-A1- 2004 123 930

## Description

### BACKGROUND OF THE INVENTION

### Field of the Invention

The present invention relates to a pneumatic tire for a motorcycle.

### Description of the Related Art

A radial tire is employed for a tire to be attached to a motorcycle. In the case in which importance is attached to a handling property as a tire performance, two belt plies obtained by inclining belt cords with respect to a circumferential direction are employed for a belt of the tire. An angle formed by the belt cord with respect to the circumferential direction is set to be 10 to 30 degrees. Such a belt ply is referred to as a cut ply. A tire having the belt ply has a high stiffness. The tire having the high stiffness has an excellent responsiveness. When a disturbance such as a side wind or an irregular road surface is caused in the tire, a driver can appropriately grasp a running condition to easily correct the running condition into a proper condition. The tire has an excellent handling property.

In the case in which importance is attached to a stability as the tire performance, a belt ply including a belt cord wound spirally in a substantially circumferential direction is employed for a belt. A structure of the belt is referred to as a "jointless structure". The belt ply (JLB ply) having the jointless structure restrains a carcass. The tire is excellent in a high speed stability.

Japanese Laid-Open Patent Publication No. 7-156611 has disclosed a radial tire for a motorcycle which holds a high speed straight running property and is excellent in a high speed cornering property and a durability. The tire includes an apex constituted by a rubber composition reinforced with a fiber and a steel filler disposed along the apex.

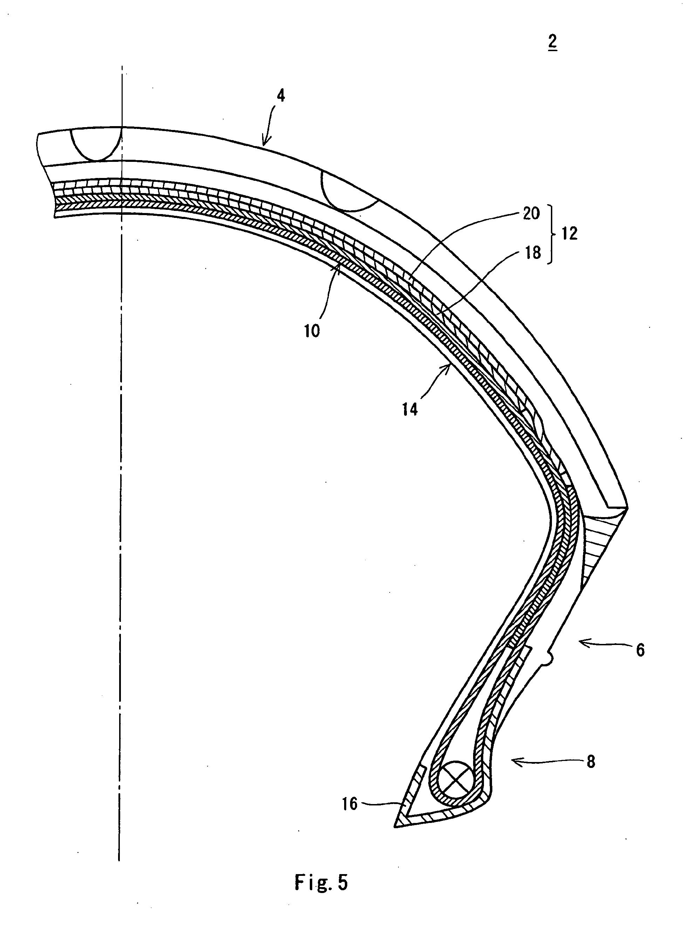

A performance of a vehicle has been improved. Consequently, a further enhancement in the tire performance has been demanded. There is a tire having a high handling property and a high stability which are obtained as a result of an investigation of a structure of a belt. Fig. 5 is a sectional view showing a part of a conventional pneumatic tire 2 to be attached to a motorcycle. In Fig. 5, a vertical direction is set to be a radial direction of the tire 2, a transverse direction is set to be an axial direction of the tire 2, and a perpendicular direction to a paper is set to be a circumferential direction of the tire 2. The tire 2 takes an almost symmetrical shape about a one-dotted chain line CL in Fig. 5. The one-dotted chain line CL represents an equator plane of the tire 2. The tire 2 comprises a tread 4, a sidewall 6, a bead 8, a carcass 10, a belt 12, an inner liner 14, and a chafer 16. The tire 2 is a pneumatic tire for a motorcycle of a tubeless type.

In the tire 2, the belt 12 is positioned on an outside in a radial direction of the carcass 10. The belt 12 is provided on the carcass 10. The belt 12 reinforces the carcass 10. The belt 12 is formed by a first belt ply 18 and a second belt ply 20. The first belt ply 18 is provided on the outside in the radial direction of the carcass 10. The second belt ply 20 is provided on an outside in a radial direction of the first belt ply 18.

The first belt ply 18 is formed by a first cord and a topping rubber, which is not shown. The first cord is inclined to a circumferential direction. An absolute value of an angle formed by the first cord with respect to the circumferential direction is equal to or greater than 60 degrees and is equal to or smaller than 80 degrees. The first belt ply 18 is a so-called cut ply.

The second belt ply 20 is obtained by spirally winding a long ribbon in a circumferential direction, which is not shown. The ribbon is constituted by a second cord extended in a longitudinal direction and a topping rubber. In other words, the second belt ply 20 includes the second cord wound spirally and extended in a substantially circumferential direction. An angle formed by the second cord with respect to the circumferential direction is equal to or smaller than 5 degrees, and particularly, is equal to or smaller than 2 degrees. The second cord is jointless. The second belt ply 20 is a so-called JLB ply.

In the tire 2, the first belt ply 18 enhances a stiffness of the tire 2. The first belt ply 18 contributes to a handling property of the tire 2. The second belt ply 20 restrains the first belt ply 18 and the carcass 10. The second belt ply 20 suppresses a change in an outside diameter of the tire 2 which is caused by a centrifugal force. The second belt ply 20 contributes to a stability of the tire 2. The tire 2 has an advantage of the cut ply and that of the JLB ply. The tire 2 is excellent in a handling property and a stability.

In the tire 2 shown in Fig. 5, steel or an aramid fiber is used for the second cord of the second belt ply 20 in respect of an enhancement in the handling property and the stability. A tire using the steel for the second cord has a problem in that a tire weight is great. By using the aramid fiber for the second cord, it is possible to prevent an increase in the weight of the tire. On the other hand, an expensive aramid fiber increases a production cost. A tire in which a reduction in a tire weight and a cost is not taken into consideration cannot be accepted in a market.

EP 1 683 654 A1 which is published after the effective date of the present invention describes a run flat tire for a car which includes a load support layer positioned on an inside in an axial direction of a sidewall. The tire further includes a belt constituted by an inner belt ply and an outer belt ply, and a full band substantially covering a whole surface on an outside in a radial direction of the belt. The full band is formed by a cord and a topping rubber. The tire may further include a center band which has a smaller width in the axial direction than the width of the full band and is laminated on the full band in the vicinity of an equator.

US 4,034,791 describes a pneumatic tire which incorporates a reinforcement belt which comprises two superposed median plies of metallic material and two laterally disposed marginal plies of non-metallic material. The marginal plies are folded to form superposed flaps, with the corresponding flaps of each marginal ply being substantially aligned.

US 2004/0123930 A1 describes a pneumatic tire with the features of the preamble of claim 1.

It is an object of the present invention to provide a pneumatic tire for a motorcycle which suppresses an increase in a tire weight and a cost and is excellent in a handling property and a stability.

### SUMMARY OF THE INVENTION

A pneumatic tire for a motorcycle according to the present invention comprises a pair of beads, a carcass laid between the beads on both sides, and a belt positioned on an outside in a radial direction of the carcass, he carcass includes a carcass ply. The carcass ply has a carcass cord. An absolute value of an angle formed by the carcass cord with respect to a circumferential direction is equal to or greater than 60 degrees and is equal to or smaller than 90 degrees. The belt includes a belt ply. The belt ply is constituted by a center portion and a pair of side portions positioned on an outside in an axial direction of the center portion. A ratio of a perimeter of the center portion to that of the side portion is equal to or higher than 10% and is equal to or lower than 50%. The center portion includes a center cord wound spirally in a substantially circumferential direction. The side portion includes a side cord wound spirally in the substantially circumferential direction. The center cord is formed of steel. The side cord is formed by an aramid fiber.

In the tire, the belt further includes another belt ply in addition to the belt ply. The belt ply has a cord. An angle formed by the cord with respect to the circumferential direction is equal to or greater than 60 degrees and is equal to or smaller than 80 degrees.

In the tire according to the present invention, the center cord and the side cord are spirally wound in the substantially circumferential direction at the outside in the radial direction of the carcass. The center cord and the side cord restrain the carcass. The tire is excellent in a stability. In a cornering operation, a rider inclines the motorcycle inward. Consequently, a contact surface of the tire is changed from a center region of the tread to a shoulder region thereof. In the tire, the center cord of the center portion is formed of steel and the side cord of the side portion positioned on the outside in the axial direction of the center portion is formed by an aramid fiber. In the tire, a stiffness of the side portion is lower than that of the center portion. In the tire, a ratio of a perimeter of the center portion to that of the side portion is regulated into a proper range. For this reason, the tire sufficiently comes in contact with a road surface also in the cornering operation. The tire reliably transmits a driving force and a braking force to the road surface. The tire is excellent in a cornering performance. Even if a disturbance such as a side wind or an irregular road surface is caused in the tire so that a running condition of a vehicle is changed suddenly, a driver can easily correct the running condition into a proper condition. The tire is excellent in a handling property. In the tire, the belt ply is constituted by the center portion and the side portion so that a cost and a tire weight can be prevented from being increased.

### BRIEF DESCRIPTION OF THE DRAWINGS

Fig. 1 is a sectional view showing a part of a pneumatic tire for a motorcycle according to an embodiment of the present invention,
Fig. 2 is an enlarged exploded perspective view showing a part of the tire in Fig. 1,
Fig. 3 is a sectional perspective view showing a part of a side portion of a second belt ply before a vulcanizing step,
Fig. 4 is an enlarged sectional perspective view showing a ribbon of the side portion in Fig. 3, and
Fig. 5 is a sectional view showing a part of a conventional pneumatic tire to be attached to a motorcycle.

### DESCRIPTION OF THE PREFERRED EMBODIMENTS

The present invention will be described below in detail based on a preferred embodiment with reference to the drawings.

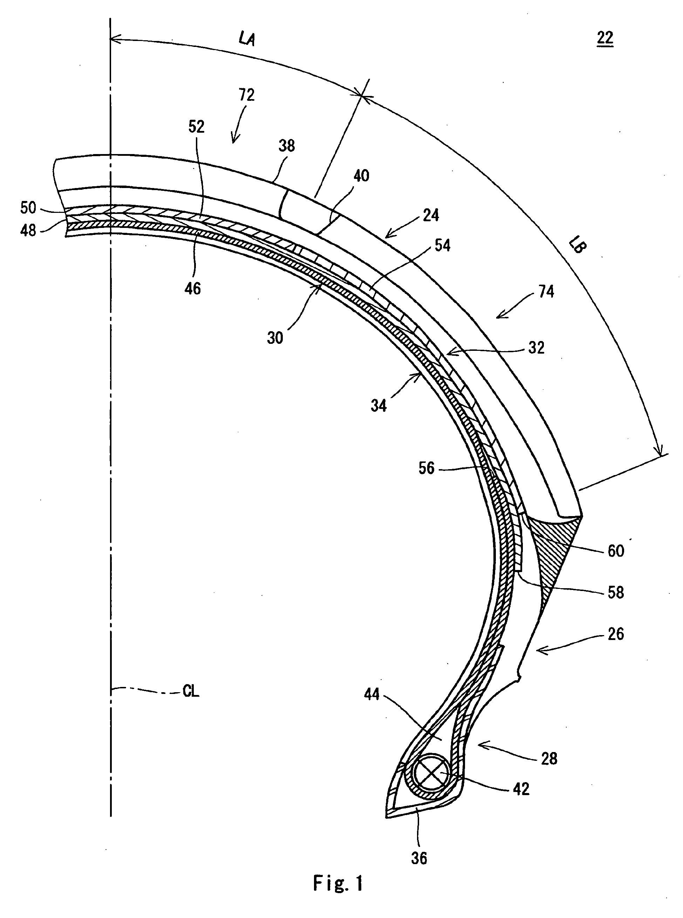

A pneumatic tire 22 for a motorcycle shown in Fig. 1 comprises a tread 24, a sidewall 26, a bead 28, a carcass 30, a belt 32, an inner liner 34 and a chafer 36. The tire 22 takes an almost symmetrical shape about a one-dotted chain line CL in Fig. 1. The one-dotted chain line CL represents an equator plane of the tire 22. The tire 22 is a tubeless type. In Fig. 1, a vertical direction is set to be a radial direction of the tire 22, a transverse direction is set to be an axial direction of the tire 22, and a perpendicular direction to a paper is set to be a circumferential direction of the tire 22.

The tread 24 is formed by a crosslinked rubber and takes the shape of an outward convex in the radial direction. An external surface of the tread 24 forms a tread surface 38 to come in contact with a road surface. A groove 40 is provided on the tread surface 38. By the groove 40, a tread pattern is formed.

The sidewall 26 is extended almost inward in the radial direction from an end of the tread 24. The sidewall 26 is formed by a crosslinked rubber. The sidewall 26 absorbs a shock from the road surface. Furthermore, the sidewall 26 prevents the external damage of the carcass 30.

The bead 28 is extended almost inward in the radial direction from the sidewall 26. The bead 28 includes a core 42 and an apex 44 extended outward in the radial direction from the core 42. The core 42 is ring-shaped and includes a plurality of non-extensible wires (typically wires formed of steel). The apex 44 is outward tapered in the radial direction and is formed by a crosslinked rubber having a high hardness.

The carcass 30 is formed by a carcass ply 46. The carcass ply 46 is laid between the beads 28 on both sides along the insides of the tread 24 and the sidewall 26. The carcass ply 46 is turned up around the core 42 from the inside toward the outside in the axial direction.

The carcass ply 46 is constituted by a carcass cord and a topping rubber, which is not shown. An absolute value of an angle formed by the carcass cord with respect to the equator plane is equal to or greater than 60 degrees and is equal to or smaller than 90 degrees. In other words, the tire 22 is a radial tire. The carcass cord is usually constituted by an organic fiber. Examples of a preferable organic fiber include a polyester fiber, a nylon fiber, a rayon fiber, a polyethylene naphthalate fiber and an aramid fiber.

The inner liner 34 is bonded to the inner surface of the carcass 30. The inner liner 34 is formed by a crosslinked rubber. A rubber having a low air permeability is used for the inner liner 34. The inner liner 34 plays a part in holding the internal pressure of the tire 22.

The chafer 36 is positioned in the vicinity of the bead 28. When the tire 22 is fitted to a rim, the chafer 36 abuts on the rim. By the abutment, the vicinity of the bead 28 is protected. The chafer 36 is usually constituted by a cloth and a rubber impregnated into the cloth. It is also possible to use a chafer formed only by a rubber.

The belt 32 is positioned on an outside in the radial direction of the carcass 30. The belt 32 is provided on the carcass 30. The belt 32 reinforces the carcass 30. In the tire 22, the belt 32 is constituted by a first belt ply 48 and a second belt ply 50. The first belt ply 48 is provided on the outside in the radial direction of the carcass ply 46. The second belt ply 50 is provided on the outside in the radial direction of the first belt ply 48. The second belt ply 50 is close to the tread 24. The second belt ply 50 includes a center portion 52 and a pair of side portions 54 positioned on the outside in the axial direction of the center portion 52. As shown, a part of the carcass ply 46 turned up around the core 42 is positioned on the inside of the first belt ply 48. A turned-up end 56 of the carcass ply 46 is positioned on the outside in the radial direction from an outer end 58 of the first belt ply 48. An outer end 60 of the second belt ply 50 is positioned on the outside in the radial direction of the outer end 58 of the first belt ply 48. The turned-up end 56 may be disposed on the inside in the radial direction from the outer end 58 of the first belt ply 48. The outer end 60 of the second belt ply 50 may be disposed on the inside in the radial direction from the outer end 58 of the first belt ply 48.

The first belt ply 48 is constituted by a first cord and a topping rubber, which is not shown. The first cord is inclined to the circumferential direction. An absolute value of an angle formed by the first cord with respect to the circumferential direction is equal to or greater than 60 degrees and is equal to or smaller than 80 degrees. The first cord is usually constituted by an organic fiber. Examples of a preferable organic fiber include a polyester fiber, a nylon fiber, a rayon fiber, a polyethylene naphthalate fiber and an aramid fiber. The first belt ply 48 is referred to as a cut ply.

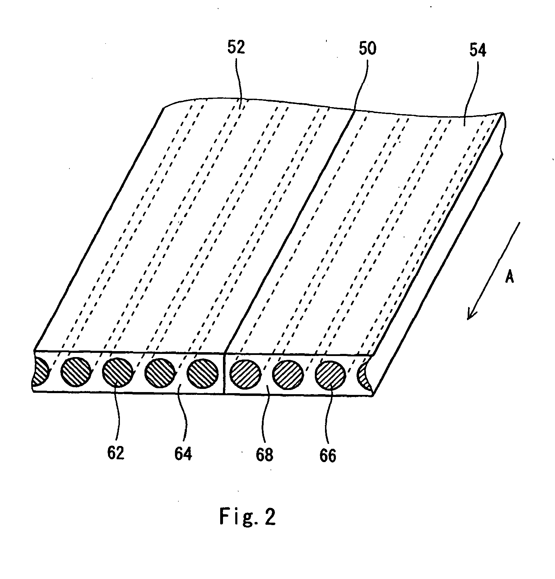

Fig. 2 is an enlarged exploded perspective view showing a part of the tire 22 in Fig. 1. Fig. 2 shows a part of the center portion 52 and the side portion 54 in the second belt ply 50. In Fig. 2, an arrow A indicates the circumferential direction of the tire 22. In the tire 22, the center portion 52 is formed by a center cord 62 and a topping rubber 64. The center cord 62 is formed of steel. The topping rubber 64 of the center portion 52 is a crosslinked rubber composition. The side portion 54 is constituted by a side cord 66 and a topping rubber 68. The side cord 66 is formed by an aramid fiber. The topping rubber 68 of the side portion 54 is formed by a crosslinked rubber composition. In the tire 22, the topping rubber 64 of the center portion 52 and the topping rubber 68 of the side portion 54 are constituted by the same rubber composition. The topping rubber 64 of the center portion 52 and the topping rubber 68 of the side portion 54 may be constituted by different rubber compositions.

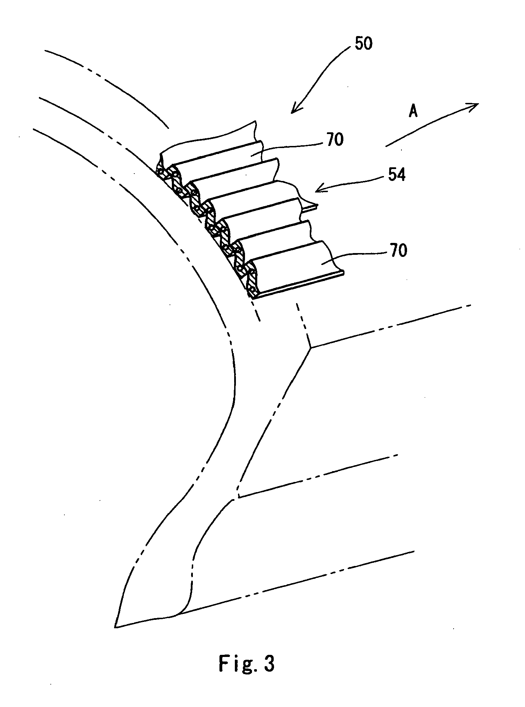

Fig. 3 is a sectional perspective view showing a part of the side portion 54 of the second belt ply 50 before a vulcanizing step. In Fig. 3, the circumferential direction of the tire 22 is shown in an arrow A. As shown in Fig. 3, the side portion 54 is formed by spirally winding a long ribbon 70 in the circumferential direction. An absolute value of an angle formed by the ribbon 70 with respect to the circumferential direction is equal to or smaller than 5 degrees, and particularly, is equal to or smaller than 2 degrees.

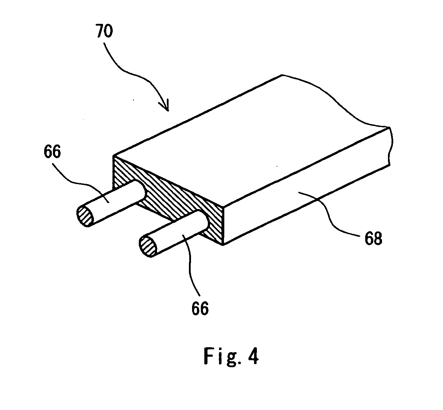

Fig. 4 is an enlarged sectional perspective view showing the ribbon 70 of the side portion 54 in Fig. 3. As shown in Fig. 4, the ribbon 70 is constituted by two side cords 66 provided in parallel and the topping rubber 68. In the ribbon 70 shown in Fig. 4, the rubber composition constituting the topping rubber 68 is not crosslinked. The side cord 66 is buried in the topping rubber 68. The side cord 66 is extended in the longitudinal direction of the ribbon 70. As described above, the ribbon 70 is spirally wound in the circumferential direction. Therefore, the side cord 66 is also wound spirally in the circumferential direction. The side cord 66 is extended in the substantially circumferential direction (see Fig. 2). An absolute value of an angle formed by the side cord 66 with respect to the circumferential direction is equal to or smaller than 5 degrees, and particularly, is equal to or smaller than 2 degrees. The side cord 66 has the jointless structure. In the present invention, a direction in which an absolute value of an angle formed with respect to the circumferential direction is equal to or smaller than 5 degrees is set to be the "substantially circumferential direction". The number of the side cords 66 in the ribbon 70 may be one or may be three or more. As shown in Fig. 3, it is preferable that a part of the ribbon 70 should overlap with the adjacent ribbon 70 in circumferential winding. Consequently, a positional shift of the side portion 54 can be prevented reliably. In the tire 22, the center cord 62 of the center portion 52 is spirally wound in the circumferential direction in the same manner as the side cord 66, which is not shown. The center cord 62 is also extended in the substantially circumferential direction (see Fig. 2). An absolute value of an angle formed by the center cord 62 with respect to the circumferential direction is equal to or smaller than 5 degrees, and particularly, is equal to or smaller than 2 degrees. The center cord 62 also has the jointless structure. Such a second belt ply 50 is referred to as a jointless belt ply (JLB ply).

As described above, the second belt ply 50 is positioned on the outside in the radial direction of the first belt ply 48 positioned on the outside in the radial direction of the carcass ply 46. The tread 24 is disposed on the outside in the radial direction of the second belt ply 50. In the tire 22, the center cord 62 and the side cord 66 in the second belt ply 50 are spirally wound in the substantially circumferential direction. Consequently, the first belt ply 48 and the carcass ply 46 are restrained. The tire 22 is excellent in a stability.

In a cornering operation, a rider inclines the motorcycle inward. Consequently, a contact surface of the tire 22 is changed from a center region 72 of the tread 24 to a shoulder region 74 thereof. As described above, in the tire 22, the center cord 62 of the center portion 52 is formed of steel and the side cord 66 of the side portion 54 positioned on the outside in the axial direction of the center portion 52 is formed by an aramid fiber. In the tire 22, a stiffness of the side portion 54 is lower than that of the center portion 52. As will be described below, in the tire 22, a ratio of a perimeter of the center portion 52 to that of the side portion 54 is regulated into a proper range. The tire 22 sufficiently comes in contact with the road surface in the cornering operation, thereby transmitting a driving force and a braking force to the road surface reliably. The tire 22 is excellent in a cornering performance. Even if a disturbance such as a side wind or an irregular road surface is caused in the tire 22 so that the running condition of the vehicle is changed suddenly, a driver can easily correct the running condition into a proper condition. The tire 22 is excellent in a handling property. The tire 22 has the handling property and the stability which are compatible with each other. The tire 22 has a smaller tire weight than that of a tire in which the cord of the second belt ply 50 is constituted by only the steel. As compared with a tire in which the cord of the second belt ply 50 is constituted by only the aramid fiber, the tire 22 has a lower cost. In the tire 22, the tire weight and the cost can be prevented from being increased.

In Fig. 1, a double arrow line LA represents a half perimeter of the center portion 52. A double arrow line LB represents a perimeter of the side portion 54. The half perimeter LA and the perimeter LB are measured along the external surface of the second belt ply 50 in a section of the tire 22. In the tire 22, the left and right side portions 54 have equal perimeter.

In the tire 22, a ratio of the half perimeter LA of the center portion 52 to the perimeter LB of the side portion 54 is equal to or higher than 10% and is equal to or lower than 50%. By setting the ratio to be equal to or higher than 10%, it is possible to effectively restrain the carcass ply and the first belt ply. The tire 22 is excellent in a stability. The amount of the aramid fiber used in the second belt ply 50 is decreased. Therefore, the cost of the tire 22 is reduced. From this viewpoint, the ratio is preferably equal to or higher than 12% and is more preferably equal to or higher than 25%. By setting the ratio to be equal to or lower than 50%, the tire 22 sufficiently comes in contact with the road surface also in the cornering operation, thereby transmitting the driving force and the braking force to the road surface reliably. The tire 22 is excellent in the handling property. The amount of the steel used in the second belt ply 50 is decreased. Therefore, the weight of the tire 22 is reduced. From this viewpoint, the ratio is preferably equal to or lower than 45% and is more preferably equal to or lower than 30%.

In the tire 22, it is preferable that a density of the center cord 62 in the center portion 52 (the number of the center cords 62 per 5 cm width) should be equal to or greater than 30 ends and be equal to or smaller than 60 ends. It is preferable that a sectional area of the center cord 62 should be equal to or greater than 0.10 mm² and be equal to or smaller than 1.6 mm². In the tire 22, it is preferable that a density of the side cord 66 in the side portion 54 (the number of the side cords 66 per 5 cm width) should be equal to or greater than 30 ends and be equal to or smaller than 60 ends. It is preferable that a sectional area of the side cord 66 should be equal to or greater than 0.10 mm² and be equal to or smaller than 1.6 mm².

When measuring dimensions and angles of the tire 22, the tire 22 is fitted into a normal rim and filled with air to have a normal internal pressure. Under the measurement, a load is not put on the tire 22. In the present specification, the normal rim means a rim provided by a standard system including standards of the tire 22. A "standard rim" in JATMA standards, a "Design Rim" in TRA standards and a "Measuring Rim" in ETRTO standards are included in the normal rim. In the present specification, a normal internal pressure means an internal pressure provided by a standard system including standards of the tire 22. A "maximum air pressure" in the JATMA standards, a "maximum value" described in "TIRE LOAD LIMITS AT VARIOUS COLD INFLATION PRESSURE" in the TRA standards, and "INFLATION PRESSURE" in the ETRTO standards are included in the normal internal pressure.

### EXAMPLES

### [Example 1]

A pneumatic tire for a motorcycle according to an example 1 which has the basic structure shown in Fig. 1 and specifications shown in the following Table 1 was obtained. The tire has a size of 190/55ZR17 M/C. A belt includes a first belt ply formed by a cut ply and a second belt ply formed by a JLB ply. A first belt cord of the first belt ply is constituted by a nylon fiber. An angle formed by the first belt cord with respect to a circumferential direction is 70 degrees. The second belt ply includes a center portion and a pair of side portions positioned on an outside in an axial direction of the center portion. The center portion includes a center cord constituted by steel. The side portion includes a side cord constituted by an aramid fiber. A ratio of a half perimeter LA of the center portion to a perimeter LB of the side portion (LA/LB X 100) is 26%. An angle formed by the center cord with respect to the circumferential direction is substantially 0 degree. An angle formed by the side cord with respect to the circumferential direction is substantially 0 degree. A density of the center cord in the center portion (the number of the center cords per 5 cm width) is 36 ends. The center cord has a sectional area of 0.95 mm². A density of the side cord in the side portion (the number of the side cords per 5 cm width) is 43 ends. The side cord has a sectional area of 0.50 mm².

### [Comparative Examples 1, 2, 3 and 4 and Examples 2 and 3]

A tire was obtained in the same manner as in the example 1 except that the ratio (LA/LB x 100) is set as shown in the following Table 1. In a comparative example 1, the cord (the center cord and the side cords) of the second belt ply is constituted by only an aramid fiber. In a comparative example 4, the cord (the center cord and the side cords) of the second belt ply is constituted by only steel.

### [Comparative Example 5]

In a comparative example 5, there is shown a conventional pneumatic tire for a motorcycle which is put on the market.

### [Actual Vehicle Evaluation]

A trial tire was attached to a rear wheel of a motorcycle (four cycles) having a displacement of 1000 cm³ and put on the market. A rim was set to have a size of MT 6.00 X 17 and the tire was set to have an air internal pressure of 290 kPa. A conventional tire put on the market is attached to a front wheel. A tire size of the front wheel is 120/70ZR17. A rim has a size of MT 3.50 X 17 and the tire has an air internal pressure of 250 kPa. In a circuit course constituted by a dry asphalted road, cornering at a speed of 100 km/h to 150 km/h and straight running at a speed of 250 km/h to a maximum speed of a vehicle (approximately 280 km/h) were executed and a rider carried out a functional evaluation having a full point set to be 5.0. It is indicated that the function is more excellent if the numeric value is greater. Items for the evaluation include a straight running stability, a cornering stability, an absorption, a ride comfort, a cornering force and a grip force. The result is shown in the following Table 1.

**Table 1 Specification of tire and result of evaluation**

| | | Comp. example 1 | Comp. example 2 | Example 2 | Example 1 | Example 3 | Comp. example 3 | Comp. example 4 | Comp. example 5 |
|---|---|---|---|---|---|---|---|---|---|
| Perimeter LA | mm | - | 5 | 12. 1 | 24.2 | 36.3 | 48.4 | 116.2 | - |
| Perimeter LB | mm | 116.2 | 111.2 | 104.1 | 92 | 79.9 | 67.8 | - | - |
| Ratio (LA/LB x 100) | % | - | 4 | 12 | 26 | 45 | 71 | - | - |
| Straight running stability | - | 3.5 | 3. 6 | 3. 7 | 4. 0 | 4. 0 | 4.0 | 4. 0 | 3.5 |
| Cornering stability | - | 3.5 | 3. 5 | 3. 7 | 3. 8 | 3. 8 | 3. 8 | 4. 0 | 3. 5 |
| Absorption | - | 4. 0 | 4. 0 | 4.0 | 4. 0 | 4. 0 | 4. 0 | 4.0 | 3. 5 |
| Ride comfort | - | 4. 0 | 4. 0 | 3. 9 | 3. 7 | 3.7 | 3. 8 | 3. 5 | 3.5 |
| Cornering force | - | 4. 0 | 4. 0 | 4. 0 | 3. 8 | 3. 7 | 3. 5 | 3. 5 | 3. 5 |
| Grip feeling | - | 4. 0 | 3.7 | 3. 7 | 3. 7 | 3. 7 | 3. 7 | 3. 5 | 3. 5 |

As shown in the Table 1, it was confirmed that the tire according to each of the examples is excellent in the straight running stability, the cornering stability, the cornering force and the grip force with the absorption and the ride comfort maintained. The tire has a handling property and a stability which are compatible with each other. From the result of the evaluation, the advantages of the present invention are apparent.

## Claims

1. A pneumatic tire (22) for a motorcycle comprising a pair of beads (28), a carcass (30) laid between the beads (28) on both sides, and a belt (32) positioned on an outside in a radial direction of the carcass (30),
wherein the carcass (30) includes a carcass ply (46),
the carcass ply (46) has a carcass cord,
an absolute value of an angle formed by the carcass cord with respect to a circumferential direction is equal to or greater than 60 degrees and is equal to or smaller than 90 degrees,
the belt (32) includes a second belt ply (50),
the second belt ply (50) is constituted by a center portion (52) and a pair of side portions (54) positioned on an outside in an axial direction of the center portion (52),
a ratio of a perimeter of the center portion (52) to that of the side portion (54) is equal to or higher than 10% and is equal to or lower than 50%,
the center portion (52) includes a center cord (62) wound spirally in a substantially circumferential direction,
the side portion (54) includes a side cord (66) wound spirally in the substantially circumferential direction,
the center cord (62) is formed of steel, and
the side cord (66) is formed by an aramid fiber,
**characterized in that**
the belt (32) further includes a first belt ply (48) in addition to the second belt ply (50),
the first belt ply (48) has a belt cord, and
an angle formed by the belt cord with respect to the circumferential direction is equal to or greater than 60 degrees and is equal to or smaller than 80 degrees.

2. The tire according to claim 1,
**characterized in that**
the first belt ply (48) is provided on the outside in the radial direction of the carcass ply (46) and the second belt ply (50) is provided on the outside in the radial direction of the first belt ply (48).

## Patentansprüche

1. Luftreifen (22) für ein Motorrad, der ein Paar Wülste (28), eine Karkasse (30), die zwischen die Wülste (28) auf beiden Seiten gelegt ist, und einen Gürtel (32), der an einer Außenseite in einer radialen Richtung der Karkasse (30) angeordnet ist, umfasst,
wobei die Karkasse (30) eine Karkasslage (46) umfasst,
die Karkasslage (46) einen Karkasskord aufweist,
ein Absolutwert eines Winkels, der durch den Karkasskord mit Bezug auf eine Umfangsrichtung gebildet ist, gleich oder größer als 60 Grad und gleich oder kleiner als 90 Grad ist,
der Gürtel (32) eine zweite Gürtellage (50) umfasst,
die zweite Gürtellage (50) durch einen Mittelabschnitt (52) und ein Paar Seitenabschnitte (54) gebildet ist, die an einer Außenseite in einer axialen Richtung des Mittelabschnitts (52) angeordnet sind,
ein Verhältnis eines Umfangs des Mittelabschnitts (52) zu dem des Seitenabschnitts (54) gleich oder höher als 10 % und gleich oder niedriger als 50 % ist,
der Mittelabschnitt (52) einen Mittelkord (62) umfasst, der im Wesentlichen in einer Umfangsrichtung spiralförmig gewickelt ist,
der Seitenabschnitt (54) einen Seitenkord (66) umfasst, der im Wesentlichen in der Umfangsrichtung spiralförmig gewickelt ist,
der Mittelkord (62) aus Stahl gebildet ist, und
der Seitenkord (66) durch eine Aramidfaser gebildet ist,
**dadurch gekennzeichnet, dass**
der Gürtel (32) ferner eine erste Gürtellage (48) zusätzlich zu der zweiten Gürtellage (50) umfasst,
die erste Gürtellage (48) einen Gürtelkord aufweist, und
ein Winkel, der durch den Gürtelkord mit Bezug auf die Umfangsrichtung gebildet ist, gleich oder größer als 60 Grad und gleich oder kleiner als 80 Grad ist.

2. Reifen nach Anspruch 1,
**dadurch gekennzeichnet, dass**
die erste Gürtellage (48) an einer Außenseite in der radialen Richtung der Karkasslage (46) vorgesehen ist, und die zweite Gürtellage (50) an der Außenseite in der radialen Richtung der ersten Gürtellage (48) vorgesehen ist.

## Revendications

1. Bandage pneumatique (22) pour une motocyclette, comprenant une paire de talons (28), une carcasse (30) posée entre les talons (28) sur les deux côtés, et une ceinture (32) positionnée sur l'extérieur dans une direction radiale de la carcasse (30),
dans lequel la carcasse (30) inclut une nappe de carcasse (46),
la nappe de carcasse (46) possède un câblé de carcasse,
une valeur absolue d'un angle formé par le câblé de carcasse par rapport à une direction circonférentielle est égale ou supérieure à 60° et est égale ou inférieure à 90°,
la ceinture (32) inclut une seconde nappe de ceinture (50),
la seconde nappe de ceinture (50) est constituée par une portion centrale (52) et par une paire de portions latérales (54) positionnées sur l'extérieur dans une direction axiale de la portion centrale (52),
un rapport d'un périmètre de la portion centrale (52) sur celui de la portion latérale (54) est égal ou supérieur à 10 %, et est égal ou inférieur à 50 %,
la portion centrale (52) inclut un câblé central (62) enroulé en spirale dans une direction sensiblement circonférentielle,
la portion latérale (54) inclut un câblé latéral (66) enroulé en spirale dans la direction sensiblement circonférentielle,
le câblé central (62) est formé en acier, et
le câblé latéral (66) est formé par une fibre aramide,
**caractérisé en ce que**
la ceinture (32) inclut en outre une première nappe de ceinture (48) en plus de la seconde nappe de ceinture (50),
la première nappe de ceinture (48) possède un câblé de ceinture, et
un angle formé par le câblé de ceinture par rapport à la direction circonférentielle est égal ou supérieur à 60° et est égal ou inférieur à 80°.

2. Pneumatique selon la revendication 1,
**caractérisé en ce que** la première nappe de ceinture (48) est prévue sur l'extérieur dans la direction radiale de la nappe de carcasse (46), et la seconde nappe de ceinture (50) est prévue sur l'extérieur dans la direction radiale de la première nappe de ceinture (48).
